# EUROPÄISCHE PATENTANMELDUNG

(11) **EP 1 274 215 A2**
(43) Veröffentlichungstag der Anmeldung: **08.01.2003**
(21) Anmeldenummer: 02014025.7
(22) Anmeldetag: 27.06.2002
(51) Int. Cl.: H04L 29/06, G06F 17/30, H04M 3/42

(54) **Verfahren zur Übertragung von Betriebsdaten einer TK-Anlage sowie TK-Anlage**

(30) Priorität: 03.07.2001 DE 10132018
(71) Anmelder: Tenovis GmbH & Co. KG, 60326 Frankfurt am Main (DE)
(72) Erfinder: Leicher, Hans-Günther, 65830 Kriftel (DE)
(74) Vertreter: Heinze, Ekkehard, Dipl.-Phys. Dr.

(57) **Zusammenfassung**

Verfahren zur, insbesondere asynchronen, Übertragung von Betriebsdaten zur Betriebszustands- und Fehlererfassung zwischen mindestens einer Telekommunikationsanlage und einem Zentralrechner und/oder einer Administrationsumgebung bzw. externen Anwendung, wobei die Betriebsdaten in XML-Dokumenten übertragen werden.

## Beschreibung

Die Erfindung betrifft ein Verfahren zur Übertragung von Betriebsdaten einer TK-Anlage nach dem Oberbegriff des Anspruchs 1 sowie eine TK-Anlage mit einer Administrationsschnittstelle nach dem Oberbegriff des Anspruchs 8.

Der Betrieb einer einzelnen TK-Anlage oder eines Anlagenverbundes erfordert einen kontinuierlichen Aufwand an Administrationsaufgaben. Der Benutzer wird dabei zweckmäßigerweise durch eine Reihe von Tools unterstützt, die die Daten der TK-Anlage aufbereiten, darstellen und die Eingaben von Daten überprüfen. Erschwert wird dieses Verfahren dadurch, daß sich beim Kunden im Betrieb TK-Anlagen unterschiedlicher Versionen oder sogar unterschiedlicher Hersteller befinden. Diese verwenden abweichende Datenstrukturen die noch dazu komplex verpackt sind. Diese unterschiedlichen Datenstrukturen und Datenprotokolle können nur schwer über Tools abgebildet werden.

Während des Betriebes einer TK-Anlage oder eines Anlagenverbundes müssen im übrigen Fehlersituationen und Betriebszustände schnell erkannt, gemeldet und Fehlerzustände behoben werden. Dazu übertragen TK-Anlagen Fehler- und Statusmeldungen (im folgenden unter den Begriffen "Betriebsdaten" oder "Meldung" zusammengefaßt) asynchron zu einer Meldezentrale. Dort werden die Meldungen automatisch bewertet und gegebenenfalls an die zuständigen Stellen/Abteilungen weitergeleitet, um entsprechend auf die Situationen reagieren zu können. Weiterhin erfolgt üblicherweise eine Archivierung der Meldungen. Die Auswertung bzw. Bewertung der übermittelten Betriebsdatensätze (Meldungen) und deren Archivierung und/oder Weiterleitung erfolgt durch einen Betriebs- oder Steuerungsrechner des Systems, der nachfolgend auch als "Zentralrechner" bezeichnet wird. Es kann sich aber hierbei um einen PC oder auch eine verteilte Datenverarbeitungsanlage handeln.

Erschwert wird dieses Verfahren durch den Betrieb von heterogenen Systemen in einzelnen Teilnetzen, deren Meldungen alle zentral an einer Stelle bewertet und archiviert und/oder verteilt werden sollen. Die Heterogenität der praktisch existierenden TK-Systeme (speziell von größeren Firmen oder Einrichtung) ist eine Folge von deren schrittweisem Aufbau mit Komponenten verschiedener Geräte- bzw. Softwaregenerationen und dem Einsatz von Bausteinen verschiedener Hersteller. Unterschiedliche und noch dazu komplexe Protokolle und Datenstrukturen erfordern hohe Investitionen zur Integration.

Vor einigen Jahren wurde daher die Idee entwickelt, die Datenschnittstelle der TK-Anlagen über eine 'Management-Information-Base' [MIB] zu beschreiben und über das standardisierte 'Simple-Network-Management-Protocol' [SNMP] zu verwalten. Für 'E-vent-Reporting' werden dort Protokolle und Daten definiert, die eine Integration über unterschiedliche Systeme ermöglichen soll. MIB und SNMP sind zwar standardisiert, aber die Implementierung in den TK-Anlagen erwies sich generell als komplex und ist in der Praxis gescheitert.

Neuere Ansätze gehen in die Richtung, WEB-basierte Administrationsumgebungen zu entwickeln. Dies erfordert aber einen recht großen Aufwand in der TK-Anlage, um dort ein HTTP-Protokoll oder sogar einen WEB-Server zu implementieren. Ein weiterer Lösungsansatz ist, einen externen WEB-Server mit entsprechenden Add-Ons für die Administrationsprogramme zu implementieren. Dies bedingt aber, die Verwaltungssoftware auf dem zentralen Server vorzuhalten, was insbesondere betriebsorganisatorische und auch rechtliche Probleme aufwerfen kann.

Aufgabe der Erfindung ist es daher, ein einfaches und unaufwendiges Verfahren anzugeben, das es erlaubt, die Meldungen von TK-Anlagen unterschiedlicher Versionen oder sogar unterschiedlicher Hersteller zusammenfassend, vereinheitlicht und vereinfacht zu erfassen und zu verarbeiten und eine gleichermaßen vereinfachte und vereinheitlichte Administrierung solcher Anlagen vorzunehmen. Desweiteren soll eine TK-Anlage vorgeschlagen werden, die anlagenseitig die Durchführung dieses Verfahrens ermöglicht.

Diese Aufgabe wird verfahrensseitig durch ein Verfahren mit den Merkmalen des Anspruchs 1 und vorrichtungsseitig durch eine Telekommunikationsanlage mit den Merkmalen des Anspruchs 8 gelöst.

Die Erfindung schließt den Gedanken ein, daß jede TK-Anlage ihre Beschreibung der Datenstrukturen und Datendarstellung "mitbringt". Die Verfahren zur Beschreibung der Datenstruktur und Datendarstellung sowie das Verpacken der Daten sollen auf einfachen Mechanismen basieren und somit einfach zu implementieren sein. Der Datentransport soll ebenfalls auf einfachen Mechanismen beruhen und einfach zu implementieren sein. Die Erfindung schließt weiterhin die Erkenntnis ein, daß dieses Verfahren aber nur durchsetzbar ist, wenn es auf standardisierte Techniken aufsetzt. Nur diese garantieren letztlich die dauerhafte Verfügbarkeit von aktuellem Entwicklungswissen und sichern Investitionen.

Unter "XML-Dokument" werden hier einerseits die Nutzdaten verstanden, in einer bevorzugten Verfahrensführung aber auch die Beschreibung der Datenstrukturen [DTD] und die Beschreibung der Datendarstellung [XSL]. Die Beschreibung der Datenstrukturen und der Datendarstellung werden in der TK-Anlage gehalten, bevorzugt mit den Meldungen der TK-Anlage verpackt und zur Meldezentrale (zum Zentralrechner) übertragen.

Dort können die Meldungen über einen Browser dargestellt oder entsprechend den Datenstrukturen über weitere Prozesse bearbeitet werden. Die XML-Technologie bietet heute die Möglichkeiten dazu, dies im Rahmen standardisierter Verfahren zu leisten. Dazu stehen Beschreibungsverfahren wie 'Document-Type-Definition' [DTD] und 'eXtensible-Stylesheet-Language' [XSL] zur Verfügung. Die XML-Dokumente können von einem WEB-Server oder direkt über einen Internet-Browser (z. B. IE5) ausgewertet und angezeigt oder durch XML Transformation innerhalb weiterer externer Anwendungen weiterverarbeitet werden.

Zur Auswertung der XML-Dokumente stehen standardisierte XML-Parser zur Verfügung, die aus einem XML-Dokument und den entsprechenden Beschreibungsdateien ein HTML-Dokument erzeugen und durch Internet-Browser dargestellt werden können oder Zugriffsmethoden definieren.

XML-Dokumente können im Kontext der Erfindung über unterschiedliche Verfahren gesendet oder empfangen werden. Einige Beispiele sind Filetransfer-Protocol [FTP], Simple-Object-Access-Protocol [SOAP], HTTP oder ein TCP/IP Listener/Transmitter Prozess. Im Prinzip genügt hier ein E-Mail-System, um die asynchronen Meldungen an eine zentrale Stelle zu senden.

Grundsätzlich lassen sich zwei wesentliche Typen von Anwendungen im Zusammenhang mit der Erfindung unterscheiden:
(A) Browser:
   Es erfolgt eine optische Darstellung der archivierten Meldungen gemäß der Beschreibung der Datenstruktur [DTD] und der Darstellungsvorlage [XSL]. Standard-Internet-Browser (z. B. IE 5) sind in der Lage XML-Dokumente selbst direkt in HTML Dokumente zu expandieren und anzuzeigen. Für unterschiedliche Ausgabegeräte (PC-Monitor oder Handy-Display) können unterschiedliche Darstellungsvorlagen erstellt werden, die auf die gleichen Datenstrukturen aufbauen.
(B) Externe Anwendung/Administrationsumgebung:
   XML-Dokumente werden von der TK-Anlage übernommen und in einer externen Anwendung weiterverarbeitet. Beispiele sind Gebührendatenverarbeitung, elektronisches Telefonbuch oder Kabelverwaltungssysteme. Externe Firmen können XML-Schnittstelle nutzen, da Datenbeschreibung [DTD] mitgeliefert wird.

Zu den oben erwähnten Verfahrensaspekten der vorgeschlagenen Lösung korrespondieren Vorrichtungsaspekte der Telekommunikationsanlage bzw. des Gesamtsystems, die sich für den Fachmann im wesentlichen unmittelbar aus den Verfahrensaspekten ergeben und daher hier nicht nochmals näher erläutert werden. Es versteht sich, daß die Ausführung des Verfahrens weitgehend softwaremäßig erfolgt, aber verdrahtete Logik und andere Hardwarekomponenten entsprechend dem fachmännischen Ermessen eingebettet sind.

Vorteile und Zweckmäßigkeiten der Erfindung ergeben sich im übrigen aus den Unteransprüchen sowie der nachfolgenden Beschreibung einer grundsätzlichen Ausführungsform der Figuren. Von diesen zeigen:
- Fig. 1: eine Prinzipskizze zur Illustration einer ersten Ausführungsform des erfindungsgemäßen Verfahrens bzw. der vorgeschlagenen Anordnung und
- Fig. 2: eine weitere Prinzipskizze zur Erläuterung einer modifizierten Ausführungsform.

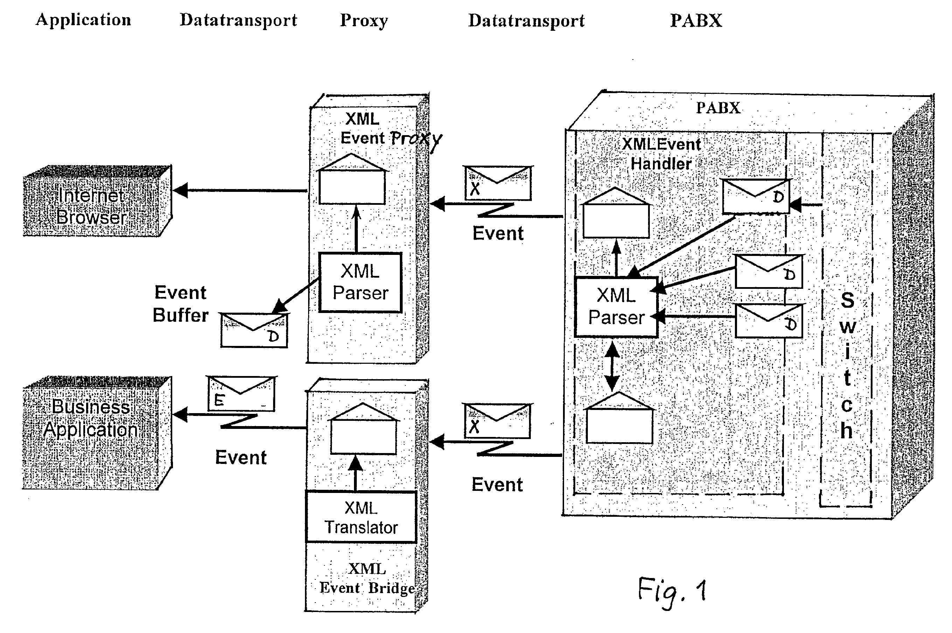

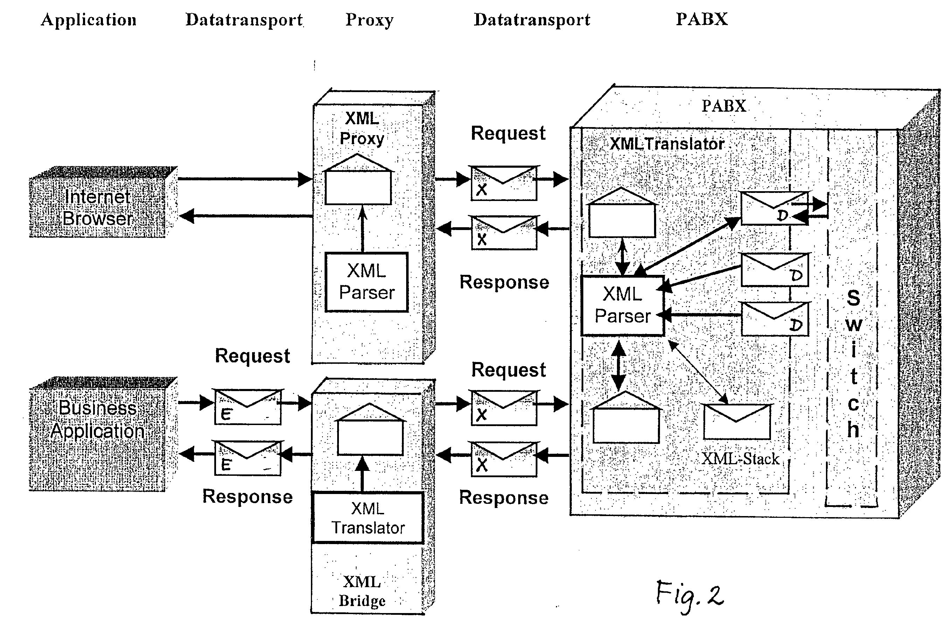

Die Prinzipskizzen zeigen eine Nebenstellenanlage PABX, von der aus asynchron Betriebsdaten zu zwei Anwendungen (Application) Internet Browser und Business Application kommuniziert werden (Fig. 1) bzw. die in eine Administrationsumgebung mit bidirektionalem Datenverkehr eingebunden ist (Fig. 2).

Gemäß Fig. 1 werden Fehler- und Statusmeldungen Event des PABX-Switch (dem eigentlichen Vermittlungsteil) über einen XML-Event-Handler, in dem ein XML-Parser implementiert ist, in XML-Dokumente gewandelt und über eine (nicht gesondert bezeichnete) Datenschnittstelle als XML-Dokument gesendet. Zu einem XML-Dokument gehören die Nutzdaten, die Beschreibung der Datenstruktur [DTD] und die Beschreibung der Datendarstellung [XSL].

In der Figur repräsentieren Briefumschläge mit dem Buchstaben "D" Betriebsdaten bzw. -datensätze und Briefumschläge mit dem Buchstaben "X" in XML-Dokumente verpackte Daten bzw. Datensätze.

Die XML-Dokumente werden gemäß der Figur einerseits einem XML-Event-Proxy und andererseits einem XML-Event-Bridge übertragen.

Die Aufgaben des XML-Event-Proxy sind:
- Empfangen der in XML-Dokumenten verpackten asynchronen Meldungen
- Archivierung der Meldungen
- Bereitstellung der Daten als HTML Dokument.

Die Aufgaben des XML-Event-Bridge sind:
- Empfangen der in XML-Dokumenten verpackten asynchronen Meldungen
- Transformierung des XML-Dokumentes in ein weiteres - von einer externen Anwendung benötigtes - Format (in der Figur gekennzeichnet mit dem Buchstaben "E")
- Filtern von Meldungen
- Versenden der transformierten XML-Dokuments an eine externe Anwendung. Dies kann z. B. eine Meldungszentrale für unterschiedliche Systeme sein.

Nach Durchlaufen des Proxy bzw. der Event-Bridge stehen die Betriebsdaten dann dem Internet-Browser zur Expansion in HTML-Dokumente zum Zwecke der Anzeige bzw. der externen Anwendung Business Application zur weiteren Auswertung, Erstellung von Statistiken, Steuerung von Eingriffen in die TK-Anlage von extern o. ä. zur Verfügung.

Die Ausführung nach Fig. 2 ist grundsätzlich ähnlich zu Fig. 1, wobei die Realisierung einer Administrationsumgebung einen bidirektionalen Datenverkehr bei der TK-Anlage erfordert.

Daten des PABX-Switch werden über einen XML-Translator in XML-Dokumente gewandelt und über eine Datenschnittstelle als XML-Dokument bereitgestellt.
Ankommende XML-Dokumente werden vom XML-Translator analysiert und zum Switch-Prozeß übermittelt oder im XML-Stack gespeichert.
Die im XML-Stack gespeicherten Dokumente werden zeitgesteuert asynchron ausgeführt.

Entsprechend ihrer komplexeren Funktion bei dieser Ausführung sind der Proxy hier als XML-Proxy und der Bridge als XML-Bridge bezeichnet.

Ein XML-Proxy kann realisiert werden als Teil des Browsers (Applet), Teil eines WEB-Servers oder als eigenständiger Prozeß.

Die zur TK-Anlage PABX hin gerichteten Nachrichten sind (entsprechend einem wesentlichen Inhalt, nämlich der Anforderung von Statusdaten o. ä.) als "Request" bezeichnet, während die von der TK-Anlage ausgehenden Nachrichten (ebenfalls in Anlehnung an eine wesentliche Funktion, nämlich die Reaktion auf Datenanforderungen seitens des Zentralrechners bzw. einer externen Anwendung) als "Response" bezeichnet sind.

Die Ausführung der Erfindung ist nicht auf diese grundsätzliche Struktur und die oben erwähnten Verfahrensaspekte beschränkt, sondern ebenso in einer Vielzahl von Abwandlungen möglich, die im Rahmen fachgemäßen Handelns liegen.

## Patentansprüche

1. Verfahren zur, insbesondere asynchronen, Übertragung von Betriebsdaten zur Betriebszustands- und Fehlererfassung zwischen mindestens einer Telekommunikationsanlage und einem Zentralrechner und/oder einer Administrationsumgebung bzw. externen Anwendung,
**dadurch gekennzeichnet, daß**
die Betriebsdaten in XML-Dokumenten übertragen werden.

2. Verfahren nach Anspruch 1,
**dadurch gekennzeichnet, daß**
Beschreibungen der Datenstrukturen und Datendarstellungen, insbesondere zusammen mit Betriebsdaten, in XML-Dokumenten zwischen der oder jeder Telekommunikationsanlage und dem Zentralrechner oder der externen Anwendung übertragen werden.

3. Verfahren nach Anspruch 2,
**dadurch gekennzeichnet, daß**
zur Beschreibung der Datenstrukturen das Beschreibungsverfahren "Document-Type-Definition" und zur Beschreibung der Datendarstellung das Beschreibungsverfahren "Extensable-Stylesheet-Language" benutzt wird.

4. Verfahren nach einem der vorangehenden Ansprüche,
**dadurch gekennzeichnet, daß**
die XML-Dokumente durch einen im Zentralrechner implementierten Browser, insbesondere Standard-Internetbrowser, oder auf einem dem Zentralrechner zugeordneten WEB-Server ausgewertet und die Betriebsdaten auf einer Anzeigeeinheit des Zentralrechners angezeigt oder über eine Ausgabeeinheit des Zentralrechners ausgegeben werden.

5. Verfahren nach einem der vorangehenden Ansprüche,
**dadurch gekennzeichnet, daß**
die Betriebsdaten als XML-Dokumente archiviert werden.

6. Verfahren nach einem der vorangehenden Ansprüche,
**dadurch gekennzeichnet, daß**
die XML-Dokumente mittels eines E-Mail-Programms versandt und verwaltet werden.

7. Verfahren nach einem der vorangehenden Ansprüche,
**dadurch gekennzeichnet, daß**
auf Anforderung vom Zentralrechner ein in der Telekommunikationsanlage implementierter Browser zum Zentralrechner heruntergeladen wird.

8. Telekommunikationsanlage mit einer Administrationsschnittstelle zur, insbesondere asynchronen, Übertragung von Betriebsdaten zur Betriebszustands- und Fehlererfassung zwischen mindestens einer Telekommunikationsanlage und einem Zentralrechner und/oder einer Administrationsumgebung bzw. externen Anwendung,
**dadurch gekennzeichnet, daß**
die Administrationsschnittstelle zur Umsetzung der Betriebsdaten in das Format von XML-Dokumenten ausgebildet ist.

9. Telekommunikationsanlage nach Anspruch 8,
**gekennzeichnet durch**
eine mit der externen Seite der Administrationsschnittstelle verbundene XML-Event-Bridge zum Empfang und zur Transformierung der XML-Dokumente in ein von einer externen Anwendung benötigtes anderes Format sowie zur Versendung des transformierten XML-Dokumentes an die externe Anwendung.

10. Telekommunikationssystem mit mindestens einer Telekommunikationsanlage, insbesondere mehreren Telekommunikationsanlagen, nach Anspruch 8 oder 9 und einem mit der oder jeder Telekommunikationsanlage verbundenen Zentralrechner,
**gekennzeichnet durch**
einen XML-Event-Proxy zum Empfang der XML-Dokumente und Archivierung der Betriebsdaten und/oder ihrer Bereitstellung als HTML-Dokumente.
